# EUROPÄISCHE PATENTANMELDUNG

(11) **EP 4 325 680 A1**
(43) Veröffentlichungstag der Anmeldung: **21.02.2024**
(21) Anmeldenummer: 22191288.4
(22) Anmeldetag: 19.08.2022
(51) Int. Cl.: H02H 7/04, H02H 9/00, H02J 4/00

(54) **SCHALTANORDNUNG UND VERFAHREN ZUM ZUSCHALTEN EINES STROMABNEHMERS ZU EINEM STROMVERTEILERNETZ UND ZUM TRENNEN VON DIESEM**

(71) Anmelder: Moser, Jürgen, 79365 Rheinhausen (DE)
(72) Erfinder: Moser, Jürgen, 79365 Rheinhausen (DE)
(74) Vertreter: Mertzlufft-Paufler, Cornelius

(57) **Zusammenfassung**

Die Erfindung betrifft eine Schaltanordnung (1) und ein Verfahren zum Verbinden eines Stromabnehmers (2) mit einem Stromverteilernetz (3) und zum Trennen von diesem, wobei ein Transformator (4) zum Umtransformieren der primärseitigen Netzspannung oberhalb von 1 kV zur sekundärseitigen Stromabnehmerspannung ausgebildet ist und wobei primärseitig der Transformator (4) über eine Spannungsleitung (18, 21) mit dem Stromverteilernetz (3) verbunden ist. In der Spannungsleitung (18, 21) sind ein Netzschutzschalter (7) und ein mit diesem in Reihe geschaltetes Schütz (8) angeordnet. (vgl. Fig. 1)

## Beschreibung

Die Erfindung betrifft eine Schaltanordnung zum Zuschalten eines mit einer Stromabnehmerspannung betriebenen Stromabnehmers zu einem mit einer Netzspannung oberhalb von 1 kV betriebenen Stromverteilernetz und zum Trennen von diesem, wobei die Schaltanordnung eine Spannungsleitung umfasst, wobei ein Transformator zum Umtransformieren der primärseitigen Netzspannung auf eine sekundärseitige Stromabnehmerspannung ausgebildet ist und wobei primärseitig der Transformator über die Spannungsleitung mit dem Stromverteilernetz verbindbar oder verbunden ist. Eine solche Schaltanordnung findet in der Praxis Anwendung.

Die Netzspannung kann eine Mittel-, Hoch- und/oder Höchstspannung sein. Unter einer Mittelspannung wird eine Spannung zwischen 1 kV und 60 kV bezeichnet, bevorzugt eine Spannung zwischen 10 kV und 30 kV, besonders bevorzugt eine Spannung zwischen 18 kV und 22 kV. Unter Hochspannung wird eine Spannung zwischen 60 kV und 150 kV bezeichnet. Unter Höchstspannung wird eine Spannung zwischen 150 kV und 1000 kV bezeichnet.

Die Erfindung betrifft weiter ein Verfahren zum Zuschalten eines Stromabnehmers zu einem mit einer Netzspannung oberhalb von 1 kV betriebenen Stromverteilernetz und zum Trennen des Stromabnehmers von dem Stromverteilernetz, wobei die Netzspannung mittels eines Transformators auf eine Stromabnehmerspannung des Stromabnehmers umtransformiert wird und wobei primärseitig der Transformator über eine Spannungsleitung mit dem Stromverteilernetz verbunden ist. Ein solches Verfahren ist bekannt.

Der Erfindung liegt die Aufgabe zugrunde, einen zuverlässigen, wartungsarmen und energieeffizienten Betrieb von Stromabnehmern, die Energie aus dem Stromverteilernetz abnehmen, zu schaffen und die Flexibilität und die Schaltspiele einer für den Betrieb des jeweiligen Stromabnehmers verwendeten Schaltanordnung zu erhöhen.

Zur Lösung dieser Aufgabe schlägt die Erfindung die Merkmale von Anspruch 1 vor. Insbesondere wird somit erfindungsgemäß bei einer Schaltanordnung der eingangs beschriebenen Art zur Lösung der genannten Aufgabe vorgeschlagen, dass in der Spannungsleitung zwischen dem Transformator und dem Stromverteilernetz ein Netzschutzschalter und ein mit diesem in Reihe geschalteter, als Schütz ausgebildeter Stromschalter angeordnet sind. Das Stromverteilernetz kann mit einer Netzspannung oberhalb von 1 kV betrieben werden. Vorteilhaft ist, wenn die Netzspannung eine Hochspannung oder Höchstspannung ist. Besonders vorteilhaft ist, wenn die Spannung eine Mittelspannung ist. Vorteilhaft ist, wenn das Stromverteilernetz ein Hoch- oder Höchstspannungs-, besonders bevorzugt ein Mittelspannungsnetz ist. Vorteilhaft ist, wenn die Spannungsleitung eine Hoch- oder Höchst-, besonders bevorzugt eine Mittelspannungsleitung ist. Das Stromverteilernetz wird typischerweise durch einen Verteilernetzbetreiber betrieben und unterliegt in der Regel nicht der Kontrolle des Betreibers eines Stromabnehmers. Nachgelagerte Stromnetzabschnitte oder Verbraucher unterliegen jedoch regelmäßig der Kontrolle des Betreibers eines Stromabnehmers, sodass dieser Änderungen in der diese betreffenden Schaltanordnung vornehmen kann. Die Erfindung ermöglicht es den Betreibern von Stromabnehmern, die Schaltspiele in der Schaltanordnung zu erhöhen und gleichzeitig Kostenvorteile zu realisieren. Der als Schütz ausgebildete Stromschalter kann hierbei dem Netzschutzschalter vorgeschaltet oder nachgeschaltet sein. In Reihe geschaltet bedeutet wie üblich, dass das Schütz und der Netzschutzschalter in einem gemeinsamen Strompfad angeordnet sind.

In der Praxis wird das Schalten und der Netzschutz von einem einzelnen Schalter übernommen. Die Erfindung hat erkannt, dass ein Funktionstrennung von Schalten und Schützen Vorteile bringt. So sind Schalter, welche mit Netzschutzfunktionen ausgestattet sind, für eine Vielzahl von Schaltvorgängen ungeeignet und unterliegen daher bei einem häufigen Schalten einem hohen Verschleiß. Ein Schütz ist hingegen zum Schalten bestens geeignet. Die Funktionstrennung und Reihenschaltung durch das Schütz entlastet daher schalttechnisch den Netzschutzschalter und trägt zu einer erheblich erhöhten Lebensdauer bei. Dies führt dazu, dass es ökonomisch sinnvoll wird, Stromabnehmer häufiger als zuvor vom Netz zu nehmen und zuzuschalten, wodurch Leerlaufströme verhindert werden, wodurch zeitoptimierter Betrieb ermöglicht wird und wodurch somit Energie eingespart werden kann.

Ein Netzschutzschalter zeichnet sich im Gegensatz zum Schütz dadurch aus, dass er mit Netzschutzfunktionen ausgestattet ist. Ihm kommt somit die Aufgabe zu, den Netzschutz sicherzustellen. Der Netzschutzschalter kann ein Übergabeschalter sein, der das Stromverteilernetz mit dem Stromnetz des Betreibers des Stromabnehmers verbindet. Der Netzschutzschalter ist typischerweise als Leistungsschalter ausgebildet. Ein Netzschutzschalter weist eine Schutzlogik und/oder eine Schutzmechanik auf. Ein Netzschutzschalter ist ausgebildet, das Stromnetz bei Netzfehlern wie Kurzschluss, Überstrom oder Erdschluss zu schützen.

Mit der Schaltanordnung kann ein Stromabnehmer und daher genau ein oder auch mehr als ein Stromabnehmer zugeschaltet oder getrennt werden.

Prinzipiell kommen alle Arten von Stromabnehmern in Betracht, also von Bauteilen, Geräten, Abnehmern oder Anlagen, welche elektrische Energie benötigen. Der Stromabnehmer kann daher insbesondere ein elektrischer Verbraucher sein. Der Verbraucher kann beispielsweise eine Produktionsanlage und/oder ein Einzelverbraucher sein. Der Stromabnehmer kann allerdings auch ein nachgelagertes Netzsegment sein.

Große Einzelverbraucher können beispielsweise Elektro-Stahlöfen, Zementmühlen, Pumpwerke, Elektrolyse-Gleichrichter oder dergleichen sein. Verbraucher können beispielsweise auch Zwischenspeicherelemente, wie etwa Akkumulatoren im Ladebetrieb und/oder in Pumpstationen, oder Brennstoffzellen sein. Verbraucher können auch Wasser-, Land-, Schienen- oder Luftfahrzeuge sein.

Der Stromabnehmer kann auch mehrere Einzelverbraucher und/oder Produktionsanlagen umfassen. Der Stromabnehmer kann eine ganze Verbrauchergruppe und/oder Netzsegmente umfassen, wobei an dem oder den Netzsegmenten wiederum ein oder mehrere Verbraucher angeschlossen sein können. Die Einzelverbraucher können beispielsweise wie zuvor beschrieben ausgebildet sein. Verbraucher können auch sonstige Werkstätten oder Fabriken sein. Die Erfindung hat den Vorteil, dass die Schaltorgane des oder der Stromabnehmer bei einem intermittierenden, i.e. nichtdurchgehenden, oder temporären Betrieb des oder der Stromabnehmer geschont werden und somit die Lebensdauer erhöht und die Kosten für Reparaturen oder Ersatzteile verringert werden. Verbraucher können auch Speicheranlagen sein, welche Energie mittels elektrischen und/oder mechanischen Speichervorrichtungen speichern.

Die hier vorgeschlagene Erfindung ist vorteilhaft insbesondere mit Blick auf die Energiewende, wobei geholfen wird, die Versorgungssicherheit effizient zu gewährleisten und Energie zu sparen.

Bei einer vorteilhaften Ausbildung der Erfindung kann vorgesehen sein, dass der als Schütz ausgebildete Stromschalter zwischen dem Netzschutzschalter und dem Transformator angeordnet ist. Diese Reihenfolge von Netzschutzschalte und Schütz kann gegenüber der entgegengesetzten Reihenfolge von Vorteil sein, da der Netzschutzschalter dann auch den Leitungsabschnitt schützt, in dem das Schütz angeordnet ist.

Die vorteilhafte Ausbildung eines Schützes zwischen dem Transformator und dem Netzschutzschalter in der Spannungsleitung kann den Vorteil haben, dass der Stromabnehmer häufiger von dem Stromverteilernetz getrennt und wieder zugeschaltet werden kann, bevor ein mechanisches oder elektrisches Versagen der Schaltorgane eintritt. Durch die Erhöhung der maximalen Anzahl von möglichen Schaltzyklen kann somit die Lebensdauer und Zuverlässigkeit der gesamten Anlage und der zugehörigen elektrischen Komponenten erhöht und gleichzeitig Kosten gespart werden.

Der Netzschutzschalter kann als Leistungsschalter, insbesondere als Sicherungs-Lasttrenner ausgebildet sein. Der Netzschutzschalter erfüllt im Gegensatz zum Schütz eine Schutzfunktion. Der Netzschutzschalter trennt beispielsweise das vom Verteilernetzbetreiber betriebene Stromverteilernetz vom Kunden- oder Verbrauchernetz oder gleicht Netzfehler aus und schützt so den Stromabnehmer vor Netzfehlern.

Bei dem zuvor genannten Netzschutzschalter kann es sich auch um einen von dem Betreiber des Stromverteilernetzes betriebenen Übergabeschalter handeln. Es kann sich bei dem zuvor genannten Schalter aber alternativ auch um einen von dem Betreiber des Stromabnehmers betriebenen Schalter wie etwa um einen Übergabeschalter, insbesondere um einen Leistungsschalter in seinem eigenen Kunden- oder Verbrauchernetz handeln.

Bisher werden Stromabnehmer über für Netzspannungen oberhalb von 1 kV, insbesondere für Mittelspannungen, ausgelegte Leistungsschalter zu Stromverteilernetzen hinzugeschaltet oder von diesen getrennt. Leistungsschalter sind mechanisch komplexer aufgebaut als Schütze und haben zudem eine Schutzlogik und Schutzmechanik und eine Schutzfunktion. Die primäre Funktion eines Leistungsschalters ist der Netzschutz bei Fehlern wie Kurzschluss, eingestellten Überstrom oder Erdschluss. Der Schaltvorgang erfolgt in der Regel, indem Energie in einem Federelement gespeichert wird. Das Federelement kann mittels einer Bestromung einer Spule definiert ausgelöst werden und gibt die gespeicherte mechanische Energie zum Trennen des Stromkreises in kurzer Zeit ab, was für eine schnelle Abschaltung im Störungsfall wichtig ist. Ein Schütz erfüllt die Anforderung auf schnelles Ausschalten nicht und erfüllt auch kein "sicheres Aus" zum Personenschutz nach VDE. Dies führt in der Praxis dazu, dass Netzschutzschalte wie etwa Leistungsschalter bereits nach einigen tausend Schaltungen nicht mehr zuverlässig funktionieren und aufwändig gewartet oder ersetzt werden müssen. Derartige Leistungsschalter können beispielsweise als Vakuum-Leistungsschalter ausgebildet sein wie etwa der SION Vakuum-Leistungsschalter der Firma Siemens^{®} für Spannungsebenen von 7,2 bis 24 kV und für höhere Spannungen.

So ist insbesondere ein Übergabeschalter als Leistungsschalter ausgebildet.

Der Netzschutzschalter befindet sich üblicherweise in der Verfügungsmacht des Netzbetreibers, also des Betreibers des Stromverteilernetzes. Es kann daher bei einem Ausfall des Netzschutzschalters zu erheblichen Entnahmeverlusten und Verzögerungen des Betreibers des Stromabnehmers führen. Ist ein solcher Netzschutzschalter vorgesehen, so erfüllt dieser Schutzfunktionen, da er den Netzschutz für die Stromabnehmer, insbesondere für die Verbraucherabgänge der Anschlussnehmer sicherstellen muss, um die öffentliche Versorgungssicherheit des Stromverteilernetzes nicht zu gefährden.

Es gibt Situationen, in denen zwischen einem Netzschutzschalter in einem Umspannwerk des Betreibers des Stromverteilernetzes und dem Standort des Stromabnehmers eine längere Distanz, die durchaus auch mehrere Kilometer betragen kann, liegen können. Auf dieser Strecke kann es zu Netzproblemen wie etwa Kurz- und Erdschlüssen kommen, um deren Abschaltung sich dann der Netzschutzschalter im vorgeschalteten Abgang des Umspannwerks kümmert.

In einem solchen Fall wird es zweckmäßig sein, wenn der Betreiber des Stromabnehmers einen von ihm betriebenen weiteren Netzschutzschalter in die Stromleitung einbaut, um den Netzschutz für seinen Stromabnehmer sicherstellen zu können, sodass die dazwischenliegende Netzstrecke von dem Netzschutzschalter des Betreibers des Stromverteilernetzes abgesichert wird und der Stromabnehmer von dem Netzschutzschalter des Betreibers des Stromabnehmers. Ein eigener Netzschutzschalter kann darüber hinaus den Vorteil haben, dass dieser Schalter nicht der Kontrolle des Betreibers des Stromabnehmers entzogen ist. Je nach den Umständen kann daher ein einzelner oder auch zwei Netzschutzschalter vorgesehen sein, der oder welche jeweils eine Netzschutzfunktion erfüllen. Dieser eine Schalter oder diese beiden bzw. sogar mehr als zwei Schalter sind zur Erfüllung der Netzschutzfunktion bevorzugt jeweils als Leistungsschalter ausgebildet.

Das Schütz kann ohne Rücksicht auf den Netzschutz, Eigentums- und Verfügungsgrenzen überall im Stromverlauf zur Trennung gesetzt werden. Eine Installation des Schützes ist bevorzugt nach, jedoch auch vor dem Netzschutzschalter möglich.

Weitere Netzschutzschalter, insbesondere Leistungsschalter, finden sich in der Regel auch in dem lokalen Betreibernetz des Stromabnehmers, d.h. im Kundennetz. Diese Schalter finden sich häufig in Schaltschränken. Diese Schalter bilden eine weitere Quelle für Verschleiß und Einspeisungsverluste des Betreibers des Stromabnehmers, wie auch der Netzschutzschalter, insbesondere Leistungsschalter, im Netz des Verteilernetzbetreibers, beispielsweise auch in einem Umspannwerk.

Die Erfindung hat nun erstmals erkannt, dass das zusätzliche Vorsehen eines Schützes den Netzschutzschalter entlasten kann, wodurch die Zuverlässigkeit der Energieeinspeisung und Energieentnahme verbessert werden kann.

Die Erfindung ist besonders geeignet für die Laststeuerung. Als Laststeuerung bezeichnet man die Steuerung der Stromnachfrage in der Industrie oder in Privathaushalten durch das gezielte Ab- und Zuschalten von Lasten aufgrund von Marktsignalen. Dadurch die Flexibilität einer Anlage erhöht und Kosteneinsparungspotentiale umgesetzt werden. Stromabnehmer können beispielsweise bei Vorhandensein hoher Energiepreise vom Netz genommen werden, und bei billigeren Energiepreisen zugeschaltet werden. Laststeuerung kann insbesondere in energieintensiven Branchen wie der Chemie-, Stahl-, Baustoff- oder Glasindustrie vorteilhaft sein. Vorteile sind auch in der Holz- oder Nahrungsmittelindustrie vorstellbar. Gemäß der Deutschen Energie-Agentur sind zahlreiche Pilotprojekte auf dem Gebiet der Laststeuerung geplant oder aktiv, beispielsweise in Bayern oder Baden-Württemberg. Die Laststeuerung ist insbesondere für die Energiewende ein vorteilhaftes Mittel, um die Lasten zielgerichtet zu koordinieren.

Ein Schütz ist mechanisch sehr viel einfacher ausgebildet als ein Netzschutzschalter wie etwa ein Leistungsschalter. Ein Schütz weist üblicherweise eine Spule und einen Anker auf. Der Anker kann durch Bestromung der Spule bewegt werden und kann auf diese Weise den Schaltvorgang auslösen. Ein Schütz kann daher sehr viel häufiger geschaltet werden als ein Netzschutzschalter, insbesondere häufiger als ein Leistungsschalter, bevor dieser ausfällt oder gewartet werden muss. Allerdings fehlen einem Schütz Schutzfunktionen, die für den Betrieb eines Stromkreises unerlässlich sind. Daher ist erfindungsgemäß vorgesehen, dass zusätzlich zu dem Netzschutzschalter und möglichen weiteren Netzschutzschaltern ein Schütz vorgesehen ist. Die Netzschutzschalter ermöglichen es, dass der oder die Stromabnehmer hinreichend sicher betrieben werden kann/können, während das Schütz es ermöglicht, den oder die Stromabnehmer häufig zu dem Stromverteilernetz hinzuzuschalten und wieder von diesem zu trennen, ohne dass es zu einem problematischen Verschleiß der Schaltorgane kommt. Das Schütz hat ausschließlich eine Schaltfunktion und keine Schutzfunktion. Ein Netzschutzschalter wie insbesondere ein Leistungsschalter hat hingegen eine Schutzfunktion und ist üblicherweise zum Schalten eher ungeeignet.

Im Stand der Technik werden diese beiden Funktionen - Schaltfunktion und Schutzfunktion - nicht konsequent getrennt. Beides soll durch einen einzelnen Schalter gewährleistet werden. Dies führt daher hohem Wartungsaufwand.

Die Erfindung erkennt nun erstmals, dass eine konsequente Trennung von Schutzfunktion und Schaltfunktion in zwei unterschiedlichen Schaltern diese Nachteile vermeidet.

Zur konsequenten Trennung der beiden Funktionen ist das Schütz unüberwacht. Das Schütz wird daher nicht durch eine Überwachungseinrichtung automatisch überwacht. Netzfehler führen daher nicht zum Schalten des Schützes. Ein Schütz hat einen Auslöser, mit dem eine Schaltung des Schützes ausgelöst wird. Der Auslöser kann manuell betätigt werden oder auch durch ein über eine Signalleitung geleitetes Signal. Die Signalleitung kann ein Signal eines Sensors leiten, wobei mit dem Sensor eine physikalische Größe, beispielsweise eine Verbrauchs-, Umgebungs- oder Produktionsgröße, wie an anderer Stelle beschrieben gemessen werden kann. Bevorzugt gibt es jedoch keine Signalverbindung zwischen der primärseitigen Spannungsleitung, in der sich das Schütz befindet, und dem Auslöser. Der Auslöser ist vielmehr von der Spannungsleitung entkoppelt. Insbesondere werden keine elektrischen Eigenschaften in der Spannungsleitung, in der das Schütz angeordnet ist, detektiert und über eine Signalleitung zum Auslöser gesendet. Es besteht vielmehr eine Signaltrennung und Funktionstrennung zwischen dem Auslöser und der Spannungsleitung.

Das Schütz kann auch über einen Computer (PC) schaltbar sein, wobei der Computer (PC) seine Befehle durch einen Bediener oder durch Software-Algorithmen oder durch ein Computerprogramm beispielsweise im Zuge einer Lastkontrolle erhalten kann. Somit kann der Stromabnehmer durch einen Bediener oder durch ein Computerprogramm zu einem Fremdnetz oder im eigenen Netz zugeschaltet oder getrennt werden. Dies kann beispielsweise in kritischen Lastverteiler-Situationen oder auch nach einem routinegemäßen Zeitplan notwendig werden. Es ist auch denkbar, dass das Schütz automatisch bei einer gewissen Tageszeit oder Nachtzeit nach Kriterien oder Algorithmen zugeschaltet oder getrennt wird. Der Computer kann beispielsweise über die zuvor genannte Signalleitung mit dem Auslöser verbunden sein.

Im Gegensatz zum Schütz ist der Netzschutzschalter wie etwa ein Leistungsschalter mit Netzschutzfunktionen ausgestattet und kann auf ungewünschte Stromveränderungen, wozu beispielsweise Störgrößen wie Erd- und Kurzschluss gehören können, die in der Spannungsleitung auftreten, reagieren und mit einer sehr schnellen Abschaltzeit gegen größere Schäden sicher freischalten. Hierzu kann vorgesehen sein, dass eine elektrische Eigenschaft in der Spannungsleitung, in der der Netzschutzschalter angeordnet ist, detektiert wird. Das Detektierte kann sodann verarbeitet werden. In Abhängigkeit von einem Ergebnis der Verarbeitung kann sodann der Netzschutzschalter eine Eigenschaft eines in der Spannungsleitung fließenden Stromes verändert werden. Derartige intelligente Mechanismen, die zum Netzschutz führen, fehlen hingegen bei dem Schütz, zumal ein Schütz auch nicht so schnell schalten kann, wie es im Netzschutz erforderlich ist. Durch den geringeren Verschleiß kann das Schütz jedoch vielfach häufiger als der Netzschutzschalter geschaltet werden.

Im Gegensatz zu einem Trennungsschalter verfügt ein Schütz über keine sichtbare Trennstrecke zum Personenschutz und ist daher trennungsstreckenfrei. Ein Schütz erfüllt somit nicht die Voraussetzungen für ein "sicheres Aus" gemäß VDE.

Infolge der Trennung von Schaltfunktion und Netz- und Personenschutz ermöglicht die Erfindung, dass das Schütz ausschließlich zum Schalten, also zum Zuschalten des Stromabnehmers zum Stromverteilernetz und zum Trennen von diesem einsetzbar ist und eingesetzt wird. Eine Netzstabilisierung bei Störungen, insbesondere ein Netzschutz, ist mit dem Schütz nicht erreichbar. Hierfür ist der Netzschutzschalter vorgesehen.

Die Trennung von Schalt- und Netzschutzfunktionen in verschiedenen Schaltorganen hat ferner den Vorteil, dass das Schütz an unterschiedlichen Stellen in der Schaltanordnung angeordnet werden kann.

Das Schütz kann daher primärseitig grundsätzlich an jedem Ort in der Spannungsleitung eingebaut sein, vor, aber auch nach der Schaltanlage, in der sich Netzschutzschalter befinden.

Bevorzugt ist das Schütz ein für Netzspannungen oberhalb von 1 kV ausgelegter Schütz. Besonders bevorzugt ist das Schütz ein für Mittelspannungen ausgelegter Schütz. Besonders bevorzugt ist das Schütz ein Vakuum-Schütz. Vakuum-Schütze werden beispielsweise von der Firma Siemens^{®} angeboten wie etwa die Vakuum-Schütze 3TL. Derartige Vakuum-Schütze zeichnen sich dadurch aus, dass sie aus einem Mittelspannungs- und einen Niederspannungsteil bestehen. Eine oder mehrere Vakuumschaltröhren bilden zusammen mit den Hauptleiteranschlüssen den Mittelspannungsteil. Der Niederspannungsteil umfasst für das Schalten der Vakuumröhre/n erforderliche Komponenten wie etwa eine Magnetspule als Antrieb, Einschaltverklinkung und/oder Ansteuerung.

Die erfindungsgemäße Schaltanordnung ist insbesondere für solche Fälle von Vorteil, bei denen der Stromabnehmer häufig vom Stromverteilernetz getrennt und zu diesem zugeschaltet werden soll. Die Erfindung kommt daher besonders dann zum Tragen, wenn der Stromabnehmer nicht durchgehend betrieben werden soll, beispielsweise intermittierend oder temporär.

Wird der Stromabnehmer nicht benötigt, beispielsweise weil der Stromabnehmer nur zu einer gewissen Zeit betrieben werden soll, ist es von Vorteil, den Stromabnehmer vom Stromverteilernetz zu trennen. Bleibt der Stromabnehmer nämlich am Stromnetz angeschlossen, so verbrauchen zur Aufrechterhaltung des magnetischen Flusses die Transformatoren, die den Strom von der Netzspannung auf die Stromabnehmerspannung transformieren, weiterhin Strom, der eingespart werden kann, wenn der Stromabnehmer vom Stromverteilernetz getrennt wird. Da durch die Erfindung die Schaltorgane geschont werden, wird ermöglicht, den Stromabnehmer nahezu verschleißfrei von dem Stromnetz zu trennen, was sich positiv auf die Wirtschaftlichkeit der gesamten Anordnung oder Anlage auswirkt. Entsprechende Vorteile können bei anderen Nicht-Dauerbetriebsstromabnehmern wie etwa bei einer temporären Netzlast erzielt werden. Die Schaltorgane derartiger Stromabnehmer unterliegen nämlich auch bei diesem erhöhtem Verschleiß, sodass die Erfindung bei diesen in besonderem Maß zum Tragen kommen kann.

Die vorliegende Erfindung kann auch dazu verwendet werden nachgelagerte Netzabschnitte oder Netzsegmente in kundeneigenen Netzen sowie in öffentlichen Stromverteilernetzen zu- oder abzuschalten. Dies kann beispielsweise bei Wartungsarbeiten oder in Notsituationen notwendig sein. Die Erfindung kann somit die Schaltspiele, die Flexibilität und Sicherheit der Netzsegmente erhöhen.

Das Schütz wird bevorzugt nach dem Sanftstart des Transformators geschlossen. Im geöffneten Zustand kann das Schütz den gesamten Stromabnehmer vom Stromverteilernetz trennen.

Bei einer vorteilhaften Ausgestaltung kann vorgesehen sein, dass eine Sanfteinschaltvorrichtung zum Sanfteinschalten des Transformators ausgebildet ist. Dies hat den Vorteil, dass der Transformator beim Einschalten, bei dem ohne einen Sanftstart erhebliche Stromspitzen auftreten können, geschont wird. Die Kombination aus Schütz und Sanfteinschaltung des Transformators ermöglicht daher ein nahezu verschleißfreies Zuschalten ohne Netzrückwirkung betreffend den Einschaltstrom und Trennen des Stromabnehmers.

Das Sanfteinschalten des Transformators erfolgt bevorzugt durch ein induktives Verfahren. Diese Art des Sanfteinschaltens ist von Vorteil, da hier lediglich Blindleistung und keine Verlustleistung auftritt; letztere tritt hingegen bei einem Sanfteinschalten mittels Widerständen auf. Das induktive Sanfteinschaltverfahren hat ferner den Vorteil, dass eine Erwärmung der Sanfteinschaltvorrichtung vermieden wird, dass keine Abkühlzeiten notwendig sind und dass die Sanfteinschaltvorrichtung sofort wieder zuschaltbar ist und unverzüglich wieder dem Transformatorstart zur Verfügung steht.

Die Sanfteinschaltvorrichtung kann über eine Stromleitung mit der Spannungsleitung verbunden sein. In diesem Fall kann die Sanfteinschaltvorrichtung insbesondere ein Signal über die Phasenlage von der Spannungsleitung erhalten. Auch kann vorgesehen sein, dass die Sanfteinschaltvorrichtung mit Energie aus der Spannungsleitung versorgt wird. Die Sanfteinschaltvorrichtung ist bevorzugt sekundärseitig oder primärseitig an den Transformator angeschlossen.

Die Sanfteinschaltvorrichtung kann daher unter anderem die Aufgabe erfüllen, eine korrekte Magnetisierung des Transformatorkerns zu gewährleisten und/oder die Phasenlage am geöffneten Schütz abzugleichen, sodass keine Spannung über den beiden Anschlüssen des Schützes anliegt. Es findet hierbei bevorzugt ein Sychronisations-Check statt, wobei die Netze vor und hinten dem Schütz synchron sind sein müssen. Hierbei kann sich der Begriff "synchron" insbesondere auf die Phasenlage beziehen.

Primärseitig bezieht sich in diesem Zusammenhang auf die Spannungsseite, welche sich zwischen Transformator und Stromverteilernetz befindet. Diese kann mit einer Spannung oberhalb von 1 kV betrieben werden.

Sekundärseitig bezieht sich in diesem Zusammenhang auf die Spannungsseite, welche sich zwischen dem Transformator und dem Stromabnehmer befindet. Dieser kann mit einer Stromabnehmerspannung des Stromabnehmerbetreibers betrieben werden. Die Stromabnehmerspannung kann beispielsweise eine Niederspannung sein, wobei die Niederspannung eine Spannung unterhalb von 1 kV sein kann. Beispielsweise kann die Stromabnehmerspannung zwischen 230 Volt und 690 Volt betragen, insbesondere 230 Volt, 400 Volt oder 690 Volt. Häufig kann die Stromabnehmerspannung allerdings auch deutlich höher sein wie etwa eine Mittelspannung von beispielsweise zwischen 6 kV und 18kV, wie etwa 6kV, 12kV oder 18kV.Typischerweise wird die Stromabnehmerspannung unterhalb der Netzspannung liegen. Die Netzspannung wird dann mittels des Transformators auf die Stromabnehmerspannung heruntertransformiert. Der Transformator ist dann entsprechend zum Heruntertransformieren ausgebildet. Allerdings kann in besonderen Situationen die Stromabnehmerspannung auch oberhalb der Netzspannung liegen. Die Netzspannung wird dann mittels des Transformators auf die Stromabnehmerspannung herauftransformiert. Der Transformator ist dann entsprechend zum Herauftransformieren ausgebildet. Beispielsweise kann die Stromabnehmerspannung auch eine Hoch- oder Höchstspannung sein. Das Übersetzungsverhältnis kann entsprechend angepasst werden durch Umtransformieren auf die Netzspannung und geeigneter Auslegung des Transformators. Die Stromabnehmerspannung kann auch eine Niederspannung sein. Als Niederspannung wird eine Spannung unterhalb 1 kV bezeichnet.

Bei Vorhandensein mehrerer Transformatoren kann es ausreichen, wenn die Sanfteinschaltvorrichtung lediglich an einem von den mehreren Transformatoren ausgebildet ist, da die restlichen Transformatoren im System ebenfalls miteinander verbunden sind und somit ebenfalls sanfteingeschaltet werden, wenn der Transformator sanfteingeschaltet wird, an dem die Sanfteinschaltvorrichtung ausgebildet ist.

Ein Stromanschlussstrang eines Stromabnehmers, an dessen Transformator eine oder die Sanfteinschaltvorrichtung angeschlossen ist, kann als Masteransschlussstrang bezeichnet werden.

Der weitere oder die übrigen Stromanschlussstränge der Stromabnehmer können als Slaveanschlussstränge bezeichnet werden. Ein Slaveanschlussstrang kann dadurch charakterisiert sein, dass die Sanfteinschaltvorrichtung nicht an dessen Transformator angeschlossen ist. Aufgrund der Kopplung von Masteranschlussstrang und Slaveanschlussstrang kann das Sanfteinschalten des Transformators des Masteranschlussstrangs zugleich ein Sanfteinschalten des Transformators eines Slaveanschlussstrangs oder mehreren Slavenanschlusssträngen bewirken.

Mit einem Stromanschlussstrang wird ein Stromabnehmer mit dem Stromverteilernetz verbunden.

In einer weiteren Ausgestaltung kann vorgesehen sein, dass die Sanfteinschaltvorrichtung mit einem Hilfsnetz verbunden ist, wobei das Hilfsnetz mit einer Spannung unterhalb der Mittelspannung, vorzugsweise mit der Stromabnehmerspannung betrieben wird. Besonders bevorzugt ist die Sanfteinschaltvorrichtung in diesem Fall sekundärseitig an den Transformator angeschlossen. Das Hilfsnetz kann das Netz des Stromabnehmers sein. Dies bietet den Vorteil, dass die Sanfteinschaltvorrichtung nicht mit einem Transformator ausgestattet sein muss, und dass somit Kosten gespart werden. Alternativ kann vorgesehen sein, dass das Hilfsnetz das öffentliche Niederspannungsnetz ist. Dieses wird üblicherweise mit weniger als 500 V, häufig mit 230 V bzw. dreiphasig mit 400 V betrieben.

Die Sanfteinschaltvorrichtung und/oder das Schütz kann für ein breites Spannungsintervall ausgelegt sein, insbesondere zum Sanfteinschalten zu sämtlichen Spannungen zwischen 1 kV und 1000 kV, bevorzugt zu sämtlichen Spannungen im Mittelspannungsbereich. Die Sanfteinschaltvorrichtung kann ferner für ein breites Spektrum von Transformatorleistungen ausgelegt sein. Dies hat den Vorteil, dass die beschriebene Schaltanordnung flexibel für unterschiedliche Netzspannungen und Transformatorleistungen verwendet werden kann.

Bei einer weiteren vorteilhaften Ausgestaltung kann vorgesehen sein, dass Mittel zum Erkennen der Phasenlage der Netzspannung des Stromverteilernetzes ausgebildet sind. Es kann insbesondere vorgesehen sein, dass mit den Mitteln eine Phasendifferenz zwischen den Phasen der Netzspannung gemessen werden kann, die vor und nach dem Schütz an der Spannungsleitung anliegen. Bevorzugt ist vorgesehen, dass Mittel zum Erkennen einer Phasendifferenz an Anschlüssen des Schützes ausgebildet sind. Die erkannte Phasenlage kann dazu genutzt werden, um den Transformator mit dem Stromverteilernetz zu synchronisieren. Dies kann für einen Sanftstart des Transformators wichtig sein, da durch die Synchronisierung Stromspitzen beim Einschalten des Transformators durch Schließen des Schützes verhindert werden. Die Mittel zum Erkennen der Phasenlage können auch vorsehen, dass eine Phasendifferenz ermittelt wird zwischen der Phase der primärseitigen Netzspannung des Stromverteilernetzes und der Phase der Stromabnehmerspannung auf der Sekundärseite des Transformators.

Zur Lösung der genannten Aufgabe sind erfindungsgemäß die Merkmale des auf ein Verfahren zum Zuschalten eines Stromabnehmers zu einem Stromverteilernetz und zum Trennen von diesem gerichteten nebengeordneten Anspruchs vorgesehen. Insbesondere wird zur Lösung der genannten Aufgabe somit erfindungsgemäß bei einem Verfahren der eingangs beschriebenen Art vorgeschlagen, dass in der Spannungsleitung zwischen dem Transformator und dem Stromverteilernetz ein Netzschutzschalter und ein mit diesem in Reihe geschalteter, als Schütz ausgebildeter Stromschalter angeordnet sind und dass zum Zuschalten des Stromabnehmers zum Stromverteilernetz und zum Trennen des Stromabnehmers von dem Stromverteilernetz der als Schütz ausgebildete Stromschaltergeschaltet wird. Wie bereits zuvor beschrieben erlaubt dies einen nahezu verschleißfreien, wartungsfreien und energieeffizienten Betrieb des Stromabnehmers. Vorteilhaft kann sein, wenn das Stromverteilernetz ein Mittelspannungsnetz ist.

Die zuvor beschriebene erfindungsgemäße Schaltanordnung und deren Varianten kann insbesondere verwendet werden, um das zuvor beschriebene Verfahren sowie die nachfolgend beschriebenen Verfahrensvarianten auszuführen.

Das erfindungsgemäße Verfahren kann so ausgebildet sein, dass der Stromabnehmer mit dem Stromverteilernetz über eine Schaltanordnung verbunden ist, wobei die Schaltanordnung erfindungsgemäß, insbesondere wie in dieser Anmeldung beschrieben oder nach einem auf eine Schaltanordnung gerichteten Schutzansprüche, ausgebildet ist.

In einer weiteren vorteilhaften Ausgestaltung kann vorgesehen sein, dass vor dem Zuschalten des Stromabnehmers zum Stromverteilernetz ein Transformator mittels einer Sanfteinschaltvorrichtung sanfteingeschaltet wird. Dies hat den Vorteil, dass mit dieser Vorrichtung Stromspitzen beim Einschalten des Transformators verhindert werden und somit in Kombination mit dem Zuschalten durch den Schütz die Anzahl der wartungsfreien Schaltzyklen des Stromabnehmers und deren Schaltanlagen erheblich erhöht werden kann.

In einer weiteren vorteilhaften Ausgestaltung kann vorgesehen sein, dass nach dem Zuschalten des Stromabnehmers die Sanfteinschaltvorrichtung deaktiviert wird. Hierdurch wird die Energieeffizienz der Anlage verbessert und ein Verschleiß weiter reduziert.

In einer weiteren vorteilhaften Ausgestaltung kann vorgesehen sein, dass eine Phasenlage des Stromverteilernetzes ermittelt wird und dass der Transformator synchron mit der Phasenlage sanfteingeschaltet wird. Hierdurch können schädliche Stromspitzen beim Einschalten des Transformators verhindert werden, wodurch dieser geschont wird, sodass in Kombination mit einem Zu- und Abschalten durch den Schütz die wartungsfreien Schaltzyklen des Stromabnehmers erhöht werden.

In einer weiteren vorteilhaften Ausgestaltung kann vorgesehen sein, dass die Sanfteinschaltvorrichtung aus einem Strom gespeist wird, der zwischen dem Netzschutzschalter und dem Schütz abgegriffen wird. Dies ermöglicht eine Versorgung der Sanfteinschaltvorrichtung mit Strom in Form von Hilfsenergie auch für den Fall, dass das Schütz geöffnet ist.

Die Stromversorgung der Sanfteinschaltvorrichtung kann auch dann sichergestellt sein, wenn vorgesehen ist, dass die Sanfteinschaltvorrichtung aus einem Hilfsnetz gespeist wird, das eine Spannung unterhalb der Mittelspannung, insbesondere die Stromabnehmerspannung, aufweist. Das Hilfsnetz kann hierbei insbesondere das Netz des Stromabnehmers oder das öffentliche Niederspannungsnetz sein. Das Hilfsnetz kann auch aus Eigenerzeugung oder über Notstrom, beispielsweise mithilfe eines Aggregates oder einer unterbrechungsfreien Stromversorgungsanlage wie etwa einer USV-Anlage, energetisch gespeist werden.

In einer weiteren vorteilhaften Ausgestaltung kann vorgesehen sein, dass ein Wert einer physikalischen Größe des Stromabnehmers, beispielsweise einer Verbrauchs-, Umgebungs- oder Produktionsgröße, mithilfe eines Sensors gemessen wird und dass das Schütz in Abhängigkeit von einem Kriterium geschaltet wird, wobei das Kriterium den gemessenen Wert einschließt.

Beispielsweise kann vorgesehen sein, dass bei Abwesenheit eines Betriebs des Stromabnehmers das Schütz derart geschaltet wird, dass die elektrische Leitung zwischen dem oder den Stromabnehmern und dem Stromverteilernetz unterbrochen wird. Dies hat den Vorteil, dass Strom gespart werden kann und Bauteile geschont werden.

Die physikalische Größe kann eine Stromstärke oder eine von einem oder mehreren Stromabnehmern abgegriffene Spannung sein. Die physikalische Größe kann auch eine andere Reaktion des Stromabnehmers auf eine stromerzeugende oder stromverbrauchende Ursache sein wie etwa eine Fördermenge durch Wegschalten von Gruppen-Antrieben oder Pumpen. Die physikalische Größe kann auch eine physikalische Größe sein, die ursächlich für die Stromverwendung durch den Stromabnehmer ist, wie etwa eine Krafterfordernis einer mechanisch-elektrischen Betätigung eines Förderkranes oder eines Förderbandes, eine vorherrschende Temperatur oder ein vorherrschender Druck, beispielsweise einer Produktionseinheit, oder sonstige produktionsspezifische physikalische Größen. Physikalischen Größen können beispielsweise Kräfte, Drehmomente, Leistungen, Massen- oder Volumenströme, oder dergleichen sein, welche für den Betrieb eines Stromabnehmers, insbesondere einer Produktionsanlage und/oder eines Einzelverbrauchers unerlässlich sind. Die Produktionsgröße kann beispielsweise auch eine Produktionsrate sein, also eine Anzahl von je Zeiteinheit produzierten Erzeugnissen.

Das Kriterium kann beispielsweise durch einen Schwellwert der physikalischen Größe gegeben sein. Der Schaltzustand des Schützes kann in diesem Fall davon abhängen, ob der Wert der physikalischen Größe den Schwellwert über- oder unterschreitet. So kann beispielsweise vorgesehen sein, dass bei Unterschreiten einer Temperatur einer Produktionseinheit das Schütz geschlossen wird und dass bei Überschreiten der Temperatur der Produktionseinheit das Schütz geöffnet wird, um beispielsweise ein schädliches Überhitzen von Teilen der Produktionseinheit zu verhindern. Somit kann hier das Schütz die Funktion eines regeltechnischen Stellglieds erfüllen.

So kann das eingebaute Schütz beispielsweise in der Nacht, wenn der Stromabnehmer sich in einem Ruhezustand befindet, den Stromabnehmer vom Stromverteilernetz trennen. Selbstverständlich kann der Stromabnehmer alternativ in der Nacht betrieben werden, sodass das Schütz sich tagsüber in einem geöffneten Zustand befindet. Dies kann Bauteile schonen und die Lebensdauer solcher Anlagen erhöhen.

Der Sensor kann an einem geeigneten Ort installiert sein. Der Sensor kann bei der Stromerzeugungsanlagen, bei einer Steuereinheit zum Sanfteinschalten des Transformators, also insbesondere an der Sanfteinschaltvorrichtung, oder an einem anderen Ort, an dem zuverlässige Bedingungen zum Erfassen des Wertes der Stromerzeugungsgröße Produktionsgröße bestehen, angeordnet sein.

Alternativ oder zusätzlich zum Sensor kann der Stromabnehmer über einen Computer (PC) verfügen, über welchen ein Befehl eingebbar ist, welcher den Stromabnehmer vom Netz trennt oder zuschaltet. Somit kann ein Benutzer die Schaltung des Schützes kontrollieren, was die Flexibilität und Handhabung der Anlage erhöhen können.

Bei einer weiteren vorteilhaften Ausgestaltung kann vorgesehen sein, dass das Schütz zwischen dem Netzschutzschalter und einem weiteren Netzschutzschalter ausgebildet ist, wobei der weitere Netzschutzschalter in der Spannungsleitung zwischen dem Schütz und dem Transformator angeordnet ist. Der weitere Netzschutzschalter ist bevorzugt als Leistungsschalter ausgebildet. Ein solcher Netzschutzschalter kann vorgesehen sein, um die Einspeisung über eine Kabelstrecke des Stromabnehmers vor Kurzschlüssen oder anderen Defekten zu schützen. Die Kombination aus Schütz und Netzschutzschalter ist besonders vorteilhaft, da einerseits der Netzschutzschalter die Netzsicherheit gewährleistet und andererseits das Schütz den Netzschutzschalter vor einem Verschleiß schützt, der auftreten würde, wenn der Netzschutzschalter die Zuschaltung und Trennung des Stromabnehmers zu und von dem Stromverteilernetz bewerkstelligen müsste.

Ein solcher Netzschutzschalter kann auch in einer Netzspannungs-Schaltanlage, insbesondere Mittelspannungs-Schaltanlage, verbaut sein, welche eine oder auch mehr als einen Stromabnehmer mit dem Stromverteilernetz verbinden kann.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Merkmale der Ausführungsbeispiele und/oder der zuvor beschriebenen Varianten erfindungsgemäßer Vorrichtungen und Verfahren.

Es zeigt:
- Fig. 1: ein erstes Ausführungsbeispiel einer erfindungsgemäß ausgebildeten Schaltanordnung mit einem Schütz und einer Sanfteinschaltvorrichtung, welche primärseitig an den Transformator angeschlossen ist;
- Fig. 2: ein zweites Ausführungsbeispiel einer erfindungsgemäß ausgebildeten Schaltanordnung mit einer Sanfteinschaltvorrichtung, welche sekundärseitig an den Transformator angeschlossen ist.
- Fig. 3: ein drittes Ausführungsbeispiel einer erfindungsgemäß ausgebildeten Schaltanordnung mit einer Sanfteinschaltvorrichtung, welche sekundärseitig an den Transformator angeschlossen ist und mehr als einen Slave aufweist.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

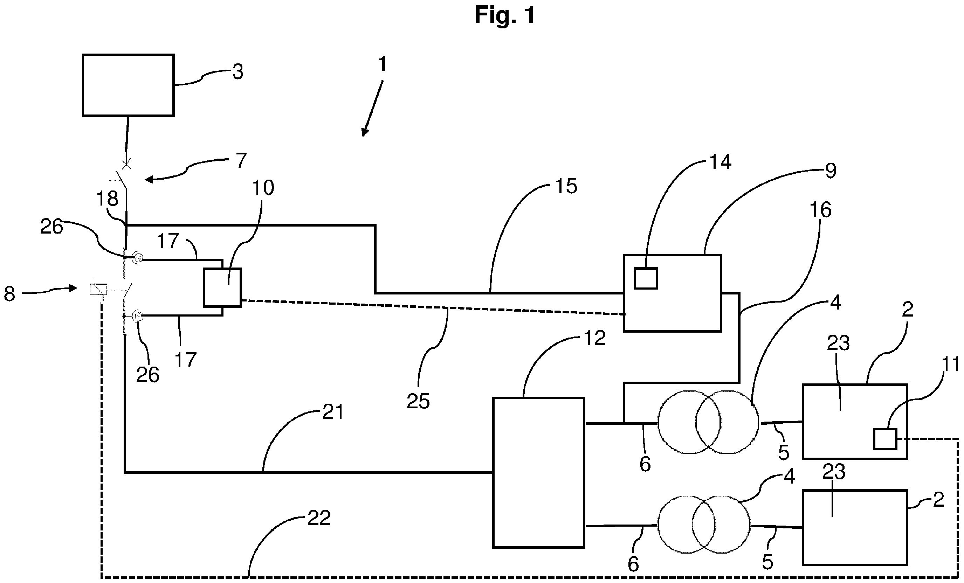

Fig. 1 zeigt eine Schaltanordnung 1 mit einer Sanfteinschaltvorrichtung 9, welche primärseitig an den Transformator 4 angeschlossen ist.

Ein Stromabnehmer 2, in einer Ausprägung als Produktionsanlage 23 dargestellt, ist über eine sekundärseitige elektrische Leitung 5 mit einem Transformator 4 verbunden. Der Transformator 4 transformiert die primärseitige Netzspannung oberhalb von 1 kV, die insbesondere eine Mittelspannung sein kann, auf die von dem Stromabnehmer 2 benötigte sekundärseitige Stromabnehmerspannung. Die Stromabnehmerspannung kann beispielsweise 230 V, 400 V, 690 V, oder 6 kV oder 12 kV oder 18 kV wie etwa bei Produktionsanlagen 23 und Einzelverbraucher 24 üblich, betragen. Die Mittelspannung kann beispielsweise 20 kV betragen. Der Transformator 4 transformiert eine Oberspannung zu einer Unterspannung gemäß einem definierten Übersetzungsverhältnis. Die Oberspannung ist typischerweise größer als die Unterspannung; die Oberspannung kann alternativ allerdings auch kleiner oder gleich sein wie die Unterspannung. In einem alternativen Ausführungsbeispiel kann es sich bei dem mit der Bezugsziffer 23 versehenen Gegenstand um einen nachgelagerten Netzabschnitt bzw. um ein Netzsegment handeln.

Eine weiterer Stromabnehmer 2, in diesem Fall ebenfalls als Produktionsanlage 23 ausgeprägt, ist sekundärseitig über eine weitere elektrische Leitung 5 mit einem weiteren Transformator 4 verbunden. Der Transformator 4 transformiert die primärseitige Netzspannung auf die sekundärseitige Stromabnehmerspannung.

Eine Sanfteinschaltvorrichtung 9 ist über eine elektrische Leitung 15 mit einer Spannungsleitung 18 an einem Abschnitt zwischen dem Netzschutzschalter 7 und dem Schütz 8 verbunden. Der Netzschutzschalter 7 ist als ein Leistungsschalter ausgebildet. Der Netzschutzschalter 7 ist die Schnittstelle zum Stromverteilernetz 3. Mit einer weiteren elektrischen Leitung 16 ist die Sanfteinschaltvorrichtung 9 primärseitig an einem Abschnitt einer elektrischen Leitung 6 angeschlossen, welcher zwischen dem Transformator 4 und dem Schütz 8 liegt. Wie in Fig. 1 gezeigt, kann der Anschlussabschnitt zwischen Transformator 4 und einem weiteren Leitungsschalter angeschlossen sein, der beispielsweise in der Netzspannungs-Schaltanlage 12 verbaut sein kann. Eine Deaktivierungsvorrichtung 14 gehört zur Sanfteinschaltvorrichtung 9 und kann diese Ein- und Ausschalten.

Eine Netzspannungs-Schaltanlage 12 ist mit den Transformatoren 4 über elektrische Leitungen 6 verbunden. Die Netzspannungs-Schaltanlage 12 hat den Zweck, einzelne oder alle Stromabnehmer 2 für die Stromeinspeisung freizugeben oder zu trennen. Zugleich schützt die Netzspannungs-Schaltanlage 12 die Netze der Stromabnehmer 2.

Weiters ist die Netzspannungs-Schaltanlage 12 über eine elektrische Leitung 21 mit dem Schütz 8 verbunden.

Das Schütz 8 kann die von den Leitungen 18 und 21 gebildete Spannungsleitung öffnen und schließen.

Eine Vorrichtung 10 zum Erkennen der Phasenlage des Stromverteilernetzes 3 ist zwischen den elektrischen Leitungen 18 und 21 ausgebildet und mit diesen über eine elektrische Leitung 17 verbunden. Die Vorrichtung 10 ist daher vor und hinter dem Schütz 8 mit der Spannungsleitung 18, 21 verbunden und kann daher eine Phasenlage des Stromverteilernetzes 3 unmittelbar vor dem Schütz 8 erkennen. Es kann insbesondere vorgesehen sein, dass mit der Vorrichtung 10 eine Phasendifferenz zwischen den Potenzialen gemessen werden kann, die unmittelbar vor und unmittelbar nach dem Schütz an der Spannungsleitung 18, 21 anliegen. Die Phasenlage 10 wird über eine Signalleitung 25 an die Sanfteinschaltvorrichtung 9 übermittelt. Diese schaltet sodann den Transformator 9 synchron mit der Phasenlage des Stromverteilernetzes 3 ein.

In den Stromabnehmern 2 ist ein Sensor 11 ausgebildet und über eine Signalleitung 22 mit dem Schütz 8 verbunden. Der Sensor 11 der Produktionsanlage 23 misst oder ermittelt beispielsweise eine Umgebungsgröße für die Produktion wie etwa eine Prozessgröße, zum Beispiel eine Temperatur, oder eine Inputgröße für die Produktion wie etwa ein Lagerbestand eines zu verarbeitenden Ausgangsmaterials. Werden für die Produktion erforderliche Bedingungen an diese Größe nicht erfüllt, wie etwa ein Unter- oder Überschreiten eines Schwellwerts unterschritten, wird das Schütz 8 geöffnet. Werden die Bedingungen an diese Größe erfüllt, bleibt oder wird das Schütz 8 geschlossen. Der Abgleich des von dem Sensor 11 gemessenen oder ermittelten Signals mit dem Schwellwert kann in dem Stromabnehmer 2 erfolgen oder alternativ in einem Steuermodul, das an dem Schütz 8 angeschlossen ist. Die Schaltung des Schützes 8 erfolgt in entsprechender Weise zur Produktionsanlage 23 in Abhängigkeit beispielsweise von einem Über- oder Unterschreiten eines vorgegebenen Schwellwerts. Vor einem Abgleich mit dem Schwellwert können die Messsignale noch gefiltert oder anderweitig verarbeitet sein, um beispielsweise zu erreichen, dass ein Trennen des Stromabnehmer 2 nur bei einem längeren Unter- oder Überschreiten des Schwellwerts erfolgt. Der Sensor 11 kann ein Messsensor sein in Bezug auf bestimmte Größen, beispielsweise physikalische Größen, welche in Produktionsanlagen 23 oder Einzelverbrauchern 24 Verwendung finden.

Der Netzschutzschalter 7 verbindet die beschriebenen Stromabnehmer 2 mit einem Stromverteilernetz 3.

Ein Spannungswandler 26 ist an den zwei Spannungsleitungen am Schütz 8 ausgebildet.

Das Ausführungsbeispiel, das in Fig. 1 dargestellt ist, weist einen Masteranschlussstrang und einen Slaveanschlussstrang auf.

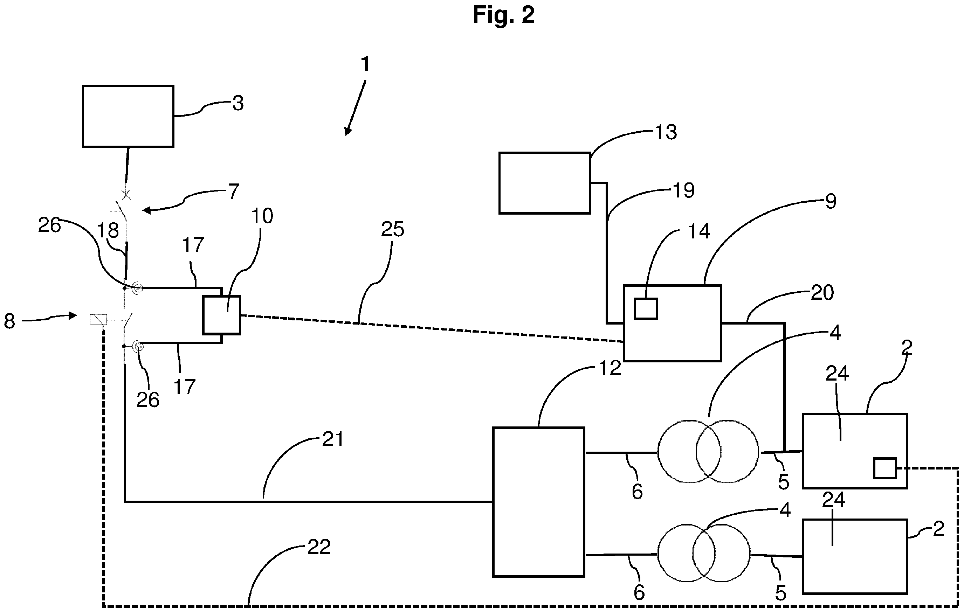

Fig. 2 zeigt ein weiteres Ausführungsbeispiel einer erfindungsgemäßen Schaltanordnung 1 mit einer Sanfteinschaltvorrichtung 9. Die Schaltanordnung 1 ist weitestgehend gleich zu der in Fig. 1 gezeigten Schaltanordnung 1 ausgebildet.

Im Unterschied zu dieser ist bei der Schaltanordnung 1 gemäß in Fig. 2 die Sanfteinschaltvorrichtung 9 nicht primärseitig, sondern sekundärseitig an den Transformator 4 angeschlossen. Hierzu ist die Sanfteinschaltvorrichtung 9 über eine elektrische Leitung 20 zwischen dem Stromabnehmer 2 und dem Transformator 4 verbunden.

Ein weiterer Unterschied zu der in Fig. 1 gezeigten Schaltanordnung 1 besteht darin, dass die Sanfteinschaltvorrichtung 9 nicht über die Spannungsleitung 18, 21 mit Strom versorgt wird, sondern über eine elektrische Leitung 19 von einem Hilfsnetz 13. Das Hilfsnetz 13 ist in dem in Fig. 2 gezeigten Ausführungsbeispiel das öffentliche Niederspannungsnetz. Alternativ könnte die Sanfteinschaltvorrichtung 9 auch von den Stromabnehmer 2 versorgt werden, die in diesem Fall das Hilfsnetz 13 bereitstellen.

Ferner sind im Unterschied zu Fig. 1 die Stromabnehmer 2 als Einzelverbraucher 24 ausgebildet. Der Sensor 11 misst eine physikalische Größe. Weicht die physikalische Größe um einen vorgegebenen Differenzwert von einem vorgegebenen Sollwert ab, trennt das Schütz 8 die Stromabnehmer 2 vom Stromverteilernetz 3.

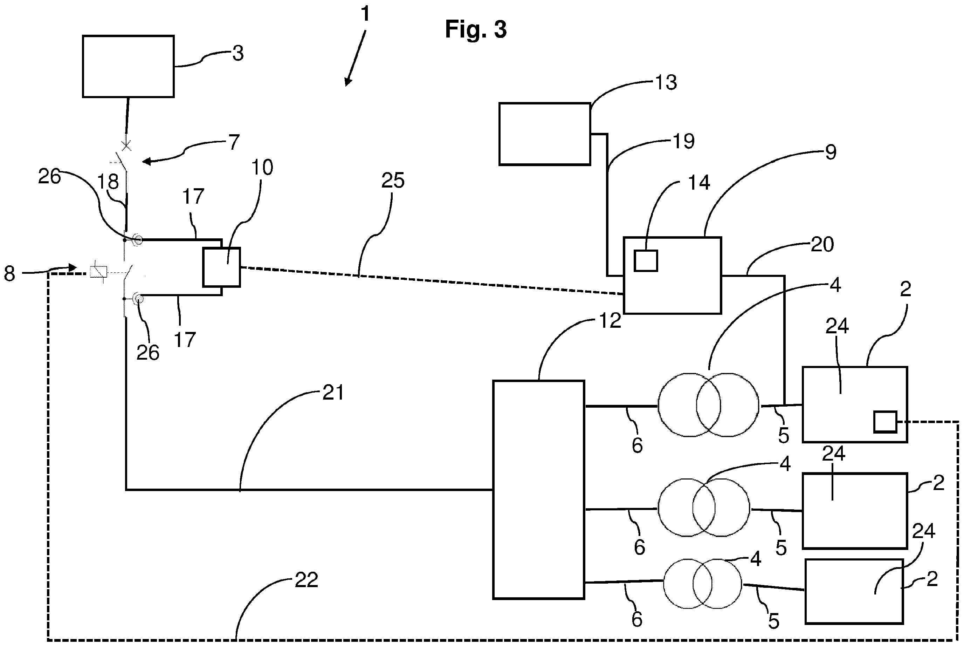

Fig. 3 zeigt ein weiteres Ausführungsbeispiel einer erfindungsgemäßen Schaltanordnung 1 mit einer Sanfteinschaltvorrichtung 9. Die Schaltanordnung 1 ist weitestgehend gleich zu der in Fig. 2 gezeigten Schaltanordnung 1 ausgebildet.

Im Unterschied zu der in Fig. 2 gezeigten Schaltanordnung 1 weist die Schaltanordnung 1 in Fig. 2 insgesamt drei Stromabnehmer 2 mit einem Masteranschlussstrang und zwei Slaveanschlusssträngen auf.

Die zuvor genannten Unterschiede in den Ausgestaltungen gemäß der Zeichnungen Fig. 1 bis Fig. 3 können in alternativen Ausführungsbeispielen beliebig miteinander kombiniert werden. So kann beispielsweise die Anzahl von Stromabnehmern 2 variieren, die Sanfteinschaltvorrichtung 9 kann primär- oder sekundärseitig an den Transformator 4 des Masteranschlussstrangs angeschlossen sein und die Sanfteinschaltvorrichtung kann aus dem Stromverteilernetz, einem Niederspannungsnetz oder dem Netz der Stromabnehmer 2 gespeist sein. Ferner kann die Art der Stromabnehmer 2 als Produktionsanlagen 23, Einzelverbraucher 24 oder einer anderen Art Anlage variieren. Es kann auch vorgesehen sein, dass die angeschlossenen Stromabnehmer 2 unterschiedlich sind. Beispielsweise kann ein erster Stromabnehmer 2 eine Produktionsanlage 23 und ein zweiter Stromabnehmer 2 ein Einzelverbraucher 24 sein.

In den gezeigten Ausführungsbeispielen ist jeweils ein einzelnes Schütz 8 gezeigt, welches sämtliche Stromabnehmer 2 vom Stromverteilernetz 3 trennt oder zu diesem zuschaltet. Es kann auch mehr als ein Schütz 8 vorgesehen sein. Dies kann insbesondere dann nützlich sein, wenn mehr als ein Stromabnehmer 2 vorgesehen ist. Besonders nützlich kann dies sein, wenn unterschiedliche Arten von Stromabnehmer 2 vorgesehen sind. So kann beispielsweise vorgesehen sein, dass ein erstes Schütz 8 einen oder mehrere Stromabnehmer 2 schaltet und dass ein zweites Schütz einen anderen oder andere Stromabnehmer 2 schaltet. Die Schütze 8 sind dann parallelgeschaltet. Es kann auch vorgesehen sein, dass zwei Schütze 8 hintereinander in Reihe geschaltet sind. Dies kann beispielsweise bei einer Parallelschaltung von Schützen 8 zweckmäßig sein, da dann ein Hauptschütz 8 vorhanden ist, mit dem alle Stromabnehmer 2 zugleich vom Stromverteilernetz 3 getrennt und diesem wieder zugeschaltet werden können, während die nachgelagerten einzelnen Schütze 8 lediglich Teile der gesamten Anlage trennen und zuschalten. Eine solche Teilzuschaltung kann insbesondere dann nützlich sein, wenn die Teilzuschaltung unterschiedliche Arten von Stromabnehmern 2 betrifft. Beispielsweise kann vorgesehen sein, dass eine Produktionsanlage 23 und ein Einzelverbraucher 24 unter unterschiedlichen Bedingungen geschaltet werden sollen, da die physikalischen Größen der Produktionsanlage 23 und des Einzelverbrauchers 24 nicht streng aneinander gekoppelt sind. Eine kaskadierende Verschaltung der Schütze 8 kann daher die Effizienz der Anlage und die Lebensdauer der Schaltorgane weiter verbessern.

Zusammenfassend betrifft die Erfindung eine Schaltanordnung 1 und ein Verfahren zum Verbinden eines Stromabnehmers 2 mit einem Stromverteilernetz 3 und zum Trennen von diesem, wobei ein Transformator 4 zum Umtransformieren der primärseitigen Netzspannung oberhalb von 1 kV zur sekundärseitigen Stromabnehmerspannung ausgebildet ist und wobei primärseitig der Transformator 4 über eine Spannungsleitung 18, 21 mit dem Stromverteilernetz 3 verbunden ist. In der Spannungsleitung 18, 21 sind ein Netzschutzschalter 7 und ein mit diesem in Reihe geschaltetes Schütz 8 angeordnet.

### Bezugszeichenliste

- 1: Schaltanordnung
- 2: Stromabnehmer
- 3: Stromverteilernetz
- 4: Transformator
- 5: Sekundärseitige elektrische Leitung
- 6: Primärseitige elektrische Leitung
- 7: Netzschutzschalter
- 8: Schütz
- 9: Sanfteinschaltvorrichtung
- 10: Mittel zum Erkennen der Phasenlage
- 11: Sensor
- 12: Netzspannungs-Schaltanlage
- 13: Hilfsnetz
- 14: Deaktivierungsvorrichtung
- 15: Elektrische Leitung
- 16: weitere Elektrische Leitung
- 17: weitere Elektrische Leitung
- 18: Spannungsleitung zwischen Schütz und Netzschutzschalter
- 19: weitere Elektrische Leitung 9 und 13
- 20: Elektrische Leitung
- 21: Spannungsleitung zwischen 12 und 8
- 22: Signalleitung
- 23: Produktionsanlage
- 24: Einzelverbraucher
- 25: Signalleitung
- 26: Spannungswandler

## Patentansprüche

1. Schaltanordnung (1) zum Zuschalten eines mit einer Stromabnehmerspannung betriebenen Stromabnehmers (2) zu einem mit einer Netzspannung oberhalb von 1 kV, insbesondere einer Mittelspannung, betriebenen Stromverteilernetz (3), insbesondere einem Mittelspannungsnetz, und zum Trennen von diesem, wobei die Schaltanordnung (1) eine Spannungsleitung (18, 21), insbesondere eine Mittelspannungsleitung, umfasst, wobei ein Transformator (4) zum Umtransformieren der primärseitigen Netzspannung auf eine sekundärseitige Stromabnehmerspannung ausgebildet ist und wobei primärseitig der Transformator (4) über die Spannungsleitung (18, 21) mit dem Stromverteilernetz (3) verbindbar oder verbunden ist, **dadurch gekennzeichnet, dass** in der Spannungsleitung (18, 21) zwischen dem Transformator (4) und dem Stromverteilernetz (3) ein Netzschutzschalter (7) und ein mit diesem in Reihe geschalteter, als Schütz (8) ausgebildeter Stromschalter (8) angeordnet sind.

2. Schaltanordnung (1) nach Anspruch 1, **dadurch gekennzeichnet, dass** der der als Schütz (8) ausgebildete Stromschalter (8) zwischen dem Netzschutzschalter (7) und dem Transformator (4) angeordnet ist.

3. Schaltanordnung (1) nach einem der vorangehenden Ansprüche, **dadurch gekennzeichnet, dass** der Netzschutzschalter (7) als Leistungsschalter ausgebildet ist.

4. Schaltanordnung (1) nach einem der vorangehenden Ansprüche, **dadurch gekennzeichnet, dass** eine Sanfteinschaltvorrichtung (9) zum Sanfteinschalten des Transformators (4) ausgebildet ist.

5. Schaltanordnung (1) nach dem vorangehenden Anspruch, **dadurch gekennzeichnet, dass** die Sanfteinschaltvorrichtung (9) über eine Stromleitung mit der Spannungsleitung, insbesondere Mittelspannungsleitung, verbunden ist, insbesondere wobei die Sanfteinschaltvorrichtung (9) sekundärseitig oder primärseitig an den Transformator (4) angeschlossen ist.

6. Schaltanordnung (1) nach einem der beiden vorangehenden Ansprüche, **dadurch gekennzeichnet, dass** die Sanfteinschaltvorrichtung (9) zum Anschluss an ein Hilfsnetz (13) ausgebildet ist, wobei das Hilfsnetz (13) mit einer Spannung unterhalb der Mittelspannung, vorzugsweise mit der Stromabnehmerspannung, betrieben wird, insbesondere wobei die Sanfteinschaltvorrichtung (9) sekundärseitig an den Transformator (4) angeschlossen ist.

7. Schaltanordnung (1) nach einem der vorangehenden Ansprüche, **dadurch gekennzeichnet, dass** Mittel zum Erkennen der Phasenlage der Netzspannung des Stromverteilernetzes (3), insbesondere Mittelspannungsnetzes, insbesondere zum Erkennen einer Phasendifferenz an Anschlüssen des Schützes (8), ausgebildet sind.

8. Schaltanordnung (1) nach einem der vorangehenden Ansprüche, **dadurch gekennzeichnet, dass** das Schütz (8) zwischen dem Netzschutzschalter (7) und einem weiteren Netzschutzschalter, der bevorzugt als Leistungsschalter ausgebildet ist, angeordnet ist, wobei der weitere Netzschutzschalter in der Spannungsleitung (18, 21) zwischen dem Schütz (8) und dem Transformator (4) ausgebildet ist.

9. Verfahren zum Zuschalten eines Stromabnehmers (2) zu einem mit einer Netzspannung oberhalb von 1 kV, insbesondere einer Mittelspannung, betriebenen Stromverteilernetz (3), insbesondere einem Mittelspannungsnetz, und zum Trennen von diesem, wobei die Netzspannung mittels eines Transformators (4) auf eine Stromabnehmerspannung des Stromabnehmers (2) umtransformiert wird und wobei primärseitig der Transformator (4) über eine Spannungsleitung (18, 21), insbesondere eine Mittelspannungsleitung, mit dem Stromverteilernetz (3) verbunden ist, **dadurch gekennzeichnet, dass** in der Spannungsleitung (18, 21) zwischen dem Transformator (4) und dem Stromverteilernetz (3) ein Netzschutzschalter (7) und ein mit diesem in Reihe geschalteter, als Schütz (8) ausgebildeter Stromschalter (8) angeordnet sind und dass zum Zuschalten des Stromabnehmers (2) zum Stromverteilernetz (3) und zum Trennen des Stromabnehmers (2) von dem Stromverteilernetz (3) der als Schütz (8) ausgebildete Stromschalter (8) geschaltet wird.

10. Verfahren nach dem vorangehenden Anspruch, **dadurch gekennzeichnet, dass** der Stromabnehmer (2) mit dem Stromverteilernetz (3) über eine Schaltanordnung (1) nach einem der Ansprüche 1 bis 8 verbunden ist.

11. Verfahren nach einem der vorangehenden Verfahrensansprüche, **dadurch gekennzeichnet, dass** vor dem Zuschalten des Stromabnehmers (2) zum Stromverteilernetz (3) der Transformator (4) mittels einer Sanfteinschaltvorrichtung (9) sanfteingeschaltet wird.

12. Verfahren nach einem der vorangehenden Verfahrensansprüche, **dadurch gekennzeichnet, dass** nach dem Zuschalten des Stromabnehmers (2) die Sanfteinschaltvorrichtung (9) deaktiviert wird.

13. Verfahren nach einem der vorangehenden Verfahrensansprüche, **dadurch gekennzeichnet, dass** eine Phasenlage des Stromverteilernetzes (3), insbesondere Mittelspannungsnetz, ermittelt wird und dass der Transformator (4) synchron mit der Phasenlage sanfteingeschaltet wird.

14. Verfahren nach einem der vorangehenden Verfahrensansprüche, **dadurch gekennzeichnet, dass** die Sanfteinschaltvorrichtung (9) aus einem Strom gespeist wird, der zwischen dem Netzschutzschalter (7) und dem als Schütz (8) ausgebildeten Stromschalter abgegriffen wird.

15. Verfahren nach einem der vorangehenden Verfahrensansprüche, **dadurch gekennzeichnet, dass** die Sanfteinschaltvorrichtung (9) aus einem Hilfsnetz (13) gespeist wird, das eine Spannung unterhalb der Mittelspannung, vorzugsweise die Stromabnehmerspannung, aufweist.

16. Verfahren nach einem der vorangehenden Verfahrensansprüche, **dadurch gekennzeichnet, dass** ein Wert einer physikalische Größe des Stromabnehmers (2), beispielsweise eine Verbrauchs-, Umgebungs- oder Produktionsgröße, mithilfe eines Sensors (11) gemessen wird und dass das Schütz (8) in Abhängigkeit von einem Kriterium geschaltet wird, wobei das Kriterium den gemessenen Wert einschließt.
